# EUROPÄISCHE PATENTSCHRIFT

(11) **EP 0 947 448 B1**
(45) Veröffentlichungstag und Bekanntmachung des Hinweises auf die Patenterteilung: **02.10.2002**
(21) Anmeldenummer: 98810277.8
(22) Anmeldetag: 30.03.1998
(51) Int. Cl.: B65G 1/08, B65G 11/20

(54) **Vorrichtung zum Transport von Stückgut**
Transport device for articles
Dispositif de transport d'articles

(43) Veröffentlichungstag der Anmeldung: 06.10.1999
(73) Patentinhaber: Jost AG Heimberg, 3627 Heimberg (CH)
(72) Erfinder: Reusser, Andreas, 3603 Thun (CH); Ruchti, Ulrich, 3613 Steffisburg (CH)
(74) Vertreter: AMMANN PATENTANWAELTE AG BERN

(56) Entgegenhaltungen:
- DE-C- 703 265
- DE-C- 4 309 038
- PATENT ABSTRACTS OF JAPAN vol. 008, no. 249 (M-338), 15.November 1984 & JP 59 124606 A (DAIFUKU KIKO KK), 18.Juli 1984,

## Beschreibung

Die Erfindung betrifft eine Vorrichtung zum Transport von Stückgut, welche Vorrichtung wenigstens eine Endstelle enthält, über welche Stückgut von einer Eingangsstelle zu einer Ausgangsstelle befördert wird, wobei die Eingangsstelle höher als die Ausgangsstelle liegt.

Die Erfindung betrifft insbesondere eine Vorrichtung zum Transport von Paketen in Paketverteilzentren, wobei die Pakete sehr unterschiedliche Gewichte und Aussenflächen mit sehr unterschiedlichen Haftungseigenschaften haben können, und wobei die Pakete nicht nur transportiert, sondern auch abgebremst und gestapelt werden.

Konventionelle Vorrichtungen der eingangs genannten Art haben Endstellen, welche meistens aus Blech- oder Holzrutschen bestehen, die Teilstrecken mit verschiedenen Neigungswinkel enthalten. Diese Endstellen haben den Nachteil, dass je nach Gewicht und Haftungseigenschaften manche Pakete zu schnell rutschen und andere zu langsam oder überhaupt nicht. Die unerwünschten Folgen sind einerseits Paketkollisionen und dadurch verursachte Beschädigungen, andererseits eine schlechte Ausnutzung der Staukapazität der Rutschen. Teilstrecken davon sind praktisch leer, während andere überfüllt sind. Pakete, die nicht rutschen, bleiben im oberen Teil einer Endstelle stehen und müssen vom Personal herunter geholt werden.

Dokument JP-A-59124606 offenbart eine Vorrichtung zum Transport von Stückgut, die Teilbereiche mit unterschiedlichen Winkeln zu einer waagerichten Ebene bilden.

Der Erfindung liegt daher die Aufgabe zugrunde, eine Vorrichtung der eingangs genannten Art zur Verfügung zu stellen, mit der die oben erwähnten Nachteile beseitigt werden können, ohne dass am unteren Ende einer Endstelle ein übermässiger Staudruck entsteht.

Erfindungsgemäss wird dies mit einer Vorrichtung erreicht, die durch die Merkmale im kennzeichnenden Teil des Anspruchs 1 gekennzeichnet ist.

Die mit der erfindungsgemässen Vorrichtung erzielten Vorteile liegen insbesondere darin, dass damit ermöglicht wird, Stückgüter mit unterschiedlichen Gewichten und Gleiteigenschaften bei ihrem Eintritt in die Endstelle sanft abzubremsen und in der Endstelle mit einer gleichmässigen Geschwindigkeit zu transportieren, so dass die oben erwähnten Paketkollisionen verhindert werden und eine bessere Nutzung der Staukapazität der Transportvorrichtung erzielt wird. Dabei werden ein sanftes Abbremsen der Stückgüter entlang der Endstelle und ein niedriger Staudruck in der Ausgangsstelle erzielt. Diese vorteilhaften Effekte werden allerdings auch dann erzielt, wenn die erfindungsgemässe Vorrichtung zum Transport von Stückgütern verwendet wird, die in Bezug auf Gewicht und Gleiteigenschaften homogen sind.

Bevorzugte Ausführungsformen der erfindungsgemässen Vorrichtung sind durch die Unteransprüche definiert.

Ausführungsbeispiele einer erfindungsgemässen Vorrichtung sind nachstehend anhand der beiliegenden Figuren beschrieben. Es zeigen
Figur 1 eine schematische Seitenansicht einer erfindungsgemässen Vorrichtung mit einer Endstelle 11.
Figur 2 eine schematische Draufsicht der Vorrichtung gemäss Figur 1 mit der Endstelle 11 und eine gleichartige, daneben angeordnete Endstelle 21.
Figur 3 eine vergrösserte Darstellung der Rollenbahn 14 der in den Figuren 1 und 2 dargestellte Vorrichtung.
Figur 4 eine vergrösserte Darstellung der Antriebsmittel, mit denen eine Rotationsbewegung der einzelnen Rollen der Rollenbahn gemäss Figur 3 erzielt wird.

Im Rahmen der hier beschriebenen Erfindung umfasst eine Endstelle eine Transportstrecke, über welche Stückgüter von einer Eingangstelle zu einer Ausgangsstelle befördert werden.

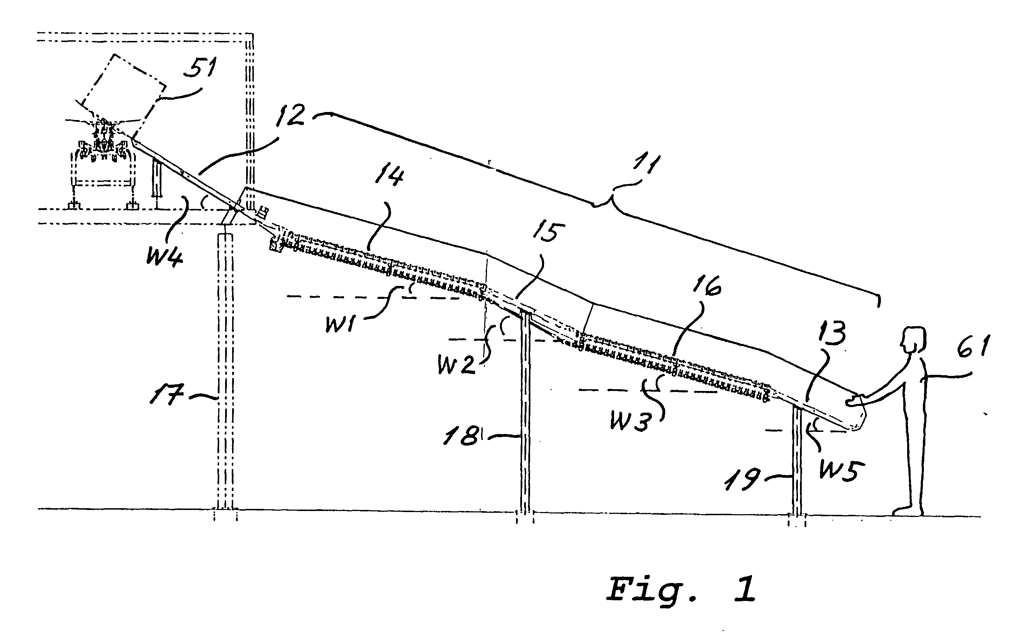

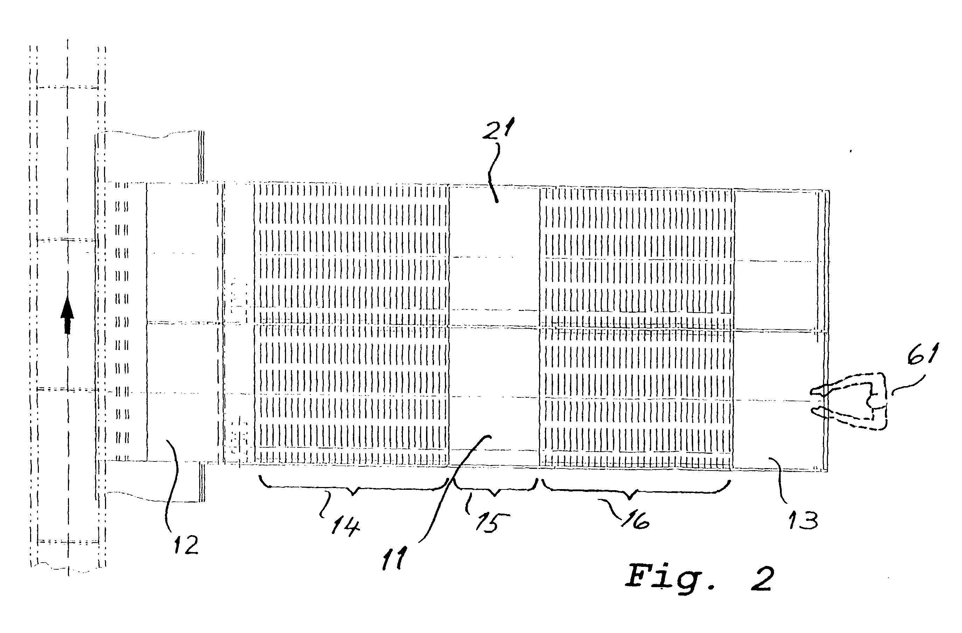

Wie aus Figuren 1 und 2 ersichtlich, enthält eine erfindungsgemässe Vorrichtung wenigstens eine Endstelle 11 für die Beförderung von Stückgut z.B. ein Paket 51 von einer Eingangsstelle 12 zu einer Ausgangsstelle 13, an der die Stückgüter, z. B. von einer Person 61, entnommen werden. Die Eingangsstelle 12 liegt höher als die Ausgangsstelle 13. Die Endstelle 11 ist auf Stützen 17, 18, 19 montiert.

Zur Vereinfachung der Darstellung ist in Figur 1 nur ein Paket 51 als Beispiel für Stückgut dargestellt. Bei einer typischen Verwendung einer erfindungsgemässen Vorrichtung werden jedoch z.B. eine Vielzahl solcher Pakete transportiert. Eine hier nicht näher beschriebene Transportvorrichtung, z.B. einen auf Schienen fahrenden Wagen bringt solche Pakete und ladet sie an der Eingangsstelle ab, z.B. durch Kippen der Tragfläche des Wagens.

Die Endstelle 11 ist zwischen der Eingangsstelle 12 und der Ausgangsstelle 13 angeordnet. Wie aus Figuren 1 und 2 ersichtlich, enthält die Endstelle 11 in ihrer Längsrichtung wenigstens zwei Teilbereiche 14, 15 bzw. 15, 16, die unterschiedliche Haftungseigenschaften haben und mit einer waagrechten Ebene unterschiedliche Winkel W1, W2 bzw. W2, W3 bilden.

In einer bevorzugten Ausführungsform enthält eine erfindungsgemässe Vorrichtung wenigstens eine Endstelle 11, welche in ihrer Längsrichtung drei Teilbereiche enthält. Der erste Teilbereich ist eine erste Rollenbahn 14. Der dritte Teilbereich ist eine zweite Rollenbahn 16. Der zweite Teilbereich ist eine einfache Rutsche 15, welche zwischen der ersten Rollenbahn 14 und der zweiten Rollenbahn 16 angeordnet ist, und welche eine kontinuierliche obere Fläche hat, die in einer Ebene liegt. Die Haftungseigenschaften der Rollenbahnen 14 bzw. 16 unterscheiden sich von der Haftungseigenschaft der einfachen Rutsche 15. Die obere Kontaktfläche jeder der Rollenbahnen 14, 16 bildet mit einer waagrechten Ebene einen Winkel W1 bzw. W3 , der kleiner als der Winkel W2 ist, welcher die einfache Rutsche 15 mit der waagrechten Ebene bildet. Die einfache Rutsche 15 ist z.B. eine Blechbahn. Das Vorhandensein der Rutsche 15, welche einen Übergang von der ersten Rollenbahn 14 in die zweite Rollenbahn 16 bildet, bewirkt nebst den beschriebenen Eigenschaften und den möglicherweise unterschiedlichen Geschwindigkeiten der Rollenbahnen die entscheidende Reduktion des Staudruckes in der Ausgangsstelle 13.

In einer bevorzugten Ausführungsform einer erfindungsgemässen Vorrichtung enthält eine der Rollenbahnen 14 oder 16, oder beide Rollenbahnen 14 und 16, Rollen, deren Oberflächen unterschiedliche Haftungseigenschaften haben.

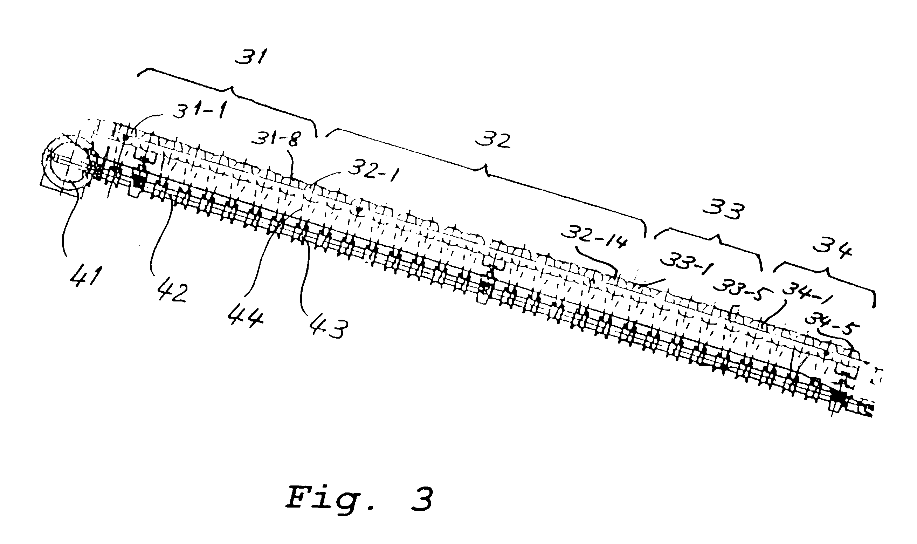

Eine solche Rollenbahn 14 ist z. B. in Figur 3 dargestellt. Wie aus dieser Figur ersichtlich, enthält die Rollenbahn 14 Gruppen 31, 32, 33, 34 von nebeneinander angeordneten aber von einander beabstandeten Rollen. Benachbarte Gruppen, z.B. 31 und 32, oder 32 und 33, oder 33 und 34, haben unterschiedliche Haftungseigenschaften. Dies gilt vorzugsweise auch für die Rollenbahn 16.

Eine weitere bevorzugte Eigenschaft der Rollenbahnen 14 und 16, oder von wenigstens einer dieser Rollenbahnen 14 und 16 ist, dass sie wenigstens eine Gruppe, z.B. Gruppe 31, von nebeneinander angeordneten aber von einander beabstandeten Rollen enthält, welche Gruppe ausschliesslich Rollen 31-1 bis 31-8 gleicher Haftungseigenschaften enthält. Gruppen 31 und 34 bestehen z.B. ausschliesslich aus Rollen mit einer glatten Stahloberfläche. Gruppe 33 besteht z.B. ausschliesslich aus Rollen mit einer Gummioberfläche.

Eine weitere bevorzugte Eigenschaft der Rollenbahnen 14 und 16, oder von wenigstens einer dieser Rollenbahnen 14 und 16 ist, dass sie wenigstens eine Gruppe, z.B. Gruppe 32, von nebeneinander angeordneten aber von einander beabstandeten Rollen 32-1, 32-2, ..., 32n, 32(n+1), ...enthält, wobei die Oberflächen von benachbarten Rollen, z.B. Rollen 32n und 32(n+1), unterschiedliche Haftungseigenschaften haben. In einer bevorzugten Variante dieser Ausführungsform enthält die Gruppe 32 z. B. alternierend Rollen mit einer Oberfläche aus Stahl und Rollen mit einer Oberfläche aus Gummi.

In einer bevorzugten Ausführungsform einer erfindungsgemässen Vorrichtung bildet die einfache Rutsche 15 mit einer waagrechten Ebene einen Winkel, der zwischen 15° und 40° liegt, während die Rollenbahn 14 bzw. die Rollenbahn 16 mit einer waagrechten Ebene einen Winkel bildet, der zwischen 0° und 25° liegt.

In einer noch bevorzugteren Ausführungsform einer erfindungsgemässen Vorrichtung bildet die einfache Rutsche 15 mit einer waagrechten Ebene einen Winkel, der zwischen 20° und 30° liegt, während die Rollenbahn 14 bzw. die Rollenbahn 16 mit einer waagrechten Ebene einen Winkel bildet, der zwischen 10° und 20° liegt.

In einer noch bevorzugteren Ausführungsform einer erfindungsgemässen Vorrichtung bildet die einfache Rutsche 15 mit einer waagrechten Ebene einen Winkel, der zwischen 23° und 27° liegt, während die Rollenbahn 14 bzw. die Rollenbahn 16 mit einer waagrechten Ebene einen Winkel bildet, der zwischen 13° und 17° liegt.

Die Eingangsstelle 12 hat vorzugsweise eine kontinuierliche obere Fläche, die in einer Ebene liegt, welche mit einer waagrechten Ebene einen Winkel W4 bildet, der vorzugsweise grösser als der Winkel W1 bzw. W3 ist, der die Rollenbahn 14 bzw. die Rollenbahn 16 mit der waagrechten Ebene bildet.

Die Ausgangsstelle 13 hat vorzugsweise eine kontinuierliche obere Fläche, die in einer Ebene liegt, welche mit einer waagrechten Ebene einen Winkel W5 bildet, der vorzugsweise grösser als der Winkel W1 bzw. W3 ist, der die Rollenbahn 14 bzw. die Rollenbahn 16 mit der waagrechten Ebene bildet.

Die in Figur 1 gezeigten Winkel haben folgende bevorzugte Werte W1 = 15°, W2 = 25°, W3 = 15°, W4 = 30°, W5 = 25°.

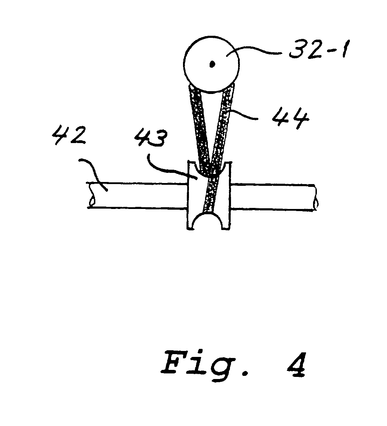

In einer bevorzugten Ausführungsform einer erfindungsgemässen Vorrichtung werden wenigstens einen Teil der Rollen der wenigstens einen Rollenbahn 14, 16 mit Antriebsmitteln angetrieben, die wie in Figur 3 dargestellt, einen Motor 41, eine Welle 42, Reibräder 43 und Riemen 44 enthalten. Figur 4 zeigt als Beispiel für den halbgekreuzten Riemenantrieb einer einzelnen Rolle 32-1 eine vergrösserte Darstellung der Antriebsmittel, mit denen eine Rotationsbewegung einer der Rollen der Rollenbahn 14 gemäss Figur 3 erzielt wird. Dieser Riemenantrieb ist so bemessen, dass einzelne Rollen von darauf liegenden Pakete oder andere Stückgüter gestoppt werden können, ohne den Antrieb der übrigen Rollen zu beeinträchtigen.

Mit dem soeben beschriebenen Antrieb wird eine mittlere Geschwindigkeit der transportierten Stückgüter 51 erzielt, die zwischen 0.1 und 0.5 Meter pro Sekunde liegt.

In einer weiteren bevorzugten Ausführungsform einer erfindungsgemässen Vorrichtung enthält wenigstens eine der Rollenbahnen 14, 16 oder jede der Rollenbahnen 14, 16 Rollen, die mit unterschiedlichen Geschwindigkeiten angetrieben werden.

In allen oben beschriebenen Ausführungsformen wird insbesondere durch die Verwendung der beschriebenen Rollenbahnen ein sanftes Abbremsen und eine gleichmässige Transportgeschwindigkeit der Stückgüter und einen niedrigen Staudruck in der Ausgangsstelle 13 erzielt.

## Patentansprüche

1. Vorrichtung zum Transport von Stückgut, welche Vorrichtung wenigstens eine Endstelle (11) enthält, über welche Stückgut von einer Eingangsstelle (12) zu einer Ausgangsstelle (13) befördert wird, wobei die Eingangsstelle (12) höher als die Ausgangsstelle (13) liegt, und die Endstelle (11) in ihrer Längsrichtung wenigstens zwei Teilbereiche (14, 15 bzw. 15, 16) enthält, die mit einer waagrechten Ebene unterschiedliche Winkel (W1, W2 bzw. W2, W3) bilden, **dadurch gekennzeichnet dass** die wenigstens zwei Teilbereiche (14,15 bzw. 15,16) unterschiedliche Haftungseigenschaften haben.

2. Vorrichtung gemäss Anspruch 1, **dadurch gekennzeichnet, dass** die wenigstens eine Endstelle (11) in ihrer Längsrichtung drei Teilbereiche enthält, wovon der erste Teilbereich eine erste Rollenbahn (14), der dritte Teilbereich eine zweite Rollenbahn (16), und der zweite Teilbereich eine einfache Rutsche (15) ist, welche eine kontinuierliche obere Fläche hat, die in einer Ebene liegt, und welche zwischen der ersten Rollenbahn (14) und der zweiten Rollenbahn (16) angeordnet ist, wobei die Haftungseigenschaften der Rollenbahnen (14 bzw. 16) sich von der Haftungseigenschaft der einfachen Rutsche (15) unterscheiden, und wobei jede der Rollenbahnen (14, 16) mit einer waagrechten Ebene einen Winkel (W1 bzw. W3) bildet, der kleiner als der Winkel (W2) ist, welcher die einfache Rutsche (15) mit der waagrechten Ebene bildet.

3. Vorrichtung gemäss Anspruch 2, **dadurch gekennzeichnet, dass** wenigstens eine der Rollenbahnen (14, 16) Rollen enthält, deren Oberflächen unterschiedliche Haftungseigenschaften haben.

4. Vorrichtung gemäss Anspruch 3, **dadurch gekennzeichnet, dass** die wenigstens eine Rollenbahn (14, 16) Gruppen (31, 32, 33, 34) von nebeneinander angeordneten, aber voneinander beabstandeten Rollen enthält, wobei benachbarte Gruppen unterschiedliche Haftungseigenschaften haben.

5. Vorrichtung gemäss Anspruch 3, **dadurch gekennzeichnet, dass** die wenigstens eine Rollenbahn (14, 16) wenigstens eine Gruppe (31) von nebeneinander angeordneten, aber voneinander beabstandeten Rollen enthält, welche Gruppe ausschliesslich Rollen (31-1 bis 31-8) gleicher Haftungseigenschaften enthält.

6. Vorrichtung gemäss Anspruch 3, **dadurch gekennzeichnet, dass** die wenigstens eine Rollenbahn (14, 16) wenigstens eine Gruppe (32) von nebeneinander angeordneten, aber voneinander beabstandeten Rollen enthält, wobei die Oberflächen von benachbarten Rollen (32n, 32[n+1]) unterschiedliche Haftungseigenschaften haben.

7. Vorrichtung gemäss Anspruch 3, **dadurch gekennzeichnet, dass** die wenigstens eine Rollenbahn (14, 16) Rollen mit einer Oberfläche aus Stahl und auch Rollen mit einer Oberfläche aus Gummi enthält.

8. Vorrichtung gemäss einem der Ansprüche 2 bis 7, **dadurch gekennzeichnet, dass** die einfache Rutsche (15) mit einer waagrechten Ebene einen Winkel bildet, der zwischen 15° und 40° liegt.

9. Vorrichtung gemäss einem der Ansprüche 2 bis 7, **dadurch gekennzeichnet, dass** die einfache Rutsche (15) mit einer waagrechten Ebene einen Winkel bildet, der zwischen 20° und 30° liegt.

10. Vorrichtung gemäss einem der Ansprüche 2 bis 7, **dadurch gekennzeichnet, dass** die einfache Rutsche (15) mit einer waagrechten Ebene einen Winkel bildet, der zwischen 23° und 27° liegt.

11. Vorrichtung gemäss einem der Ansprüche 2 bis 10, **dadurch gekennzeichnet, dass** die wenigstens eine Rollenbahn oder jede der Rollenbahnen (14, 16) mit einer waagrechten Ebene einen Winkel bildet, der zwischen 0° und 25° liegt.

12. Vorrichtung gemäss einem der Ansprüche 2 bis 10, **dadurch gekennzeichnet, dass** die wenigstens eine Rollenbahn oder jede der Rollenbahnen (14, 16) mit einer waagrechten Ebene einen Winkel bildet, der zwischen 10° und 20° liegt.

13. Vorrichtung gemäss einem der Ansprüche 2 bis 10, **dadurch gekennzeichnet, dass** die wenigstens eine Rollenbahn oder jede der Rollenbahnen (14, 16) mit einer waagrechten Ebene einen Winkel bildet, der zwischen 13° und 17° liegt.

14. Vorrichtung gemäss einem der Ansprüche 2 bis 13, **dadurch gekennzeichnet, dass** die einfache Rutsche (15) eine Blechbahn ist.

15. Vorrichtung gemäss einem der Ansprüche 2 bis 14, **dadurch gekennzeichnet, dass** die Eingangsstelle (12) eine kontinuierliche obere Fläche hat, die in einer Ebene liegt, welche mit einer waagrechten Ebene einen Winkel (W4) bildet, der grösser als der Winkel (W1 bzw. W3) ist, der die wenigstens eine Rollenbahn oder jede der Rollenbahnen (14 bzw. 16) mit der waagrechten Ebene bildet.

16. Vorrichtung gemäss einem der Ansprüche 2 bis 15, **dadurch gekennzeichnet, dass** die Ausgangsstelle (13) eine kontinuierliche obere Fläche hat, die in einer Ebene liegt, welche mit einer waagrechten Ebene einen Winkel (W5) bildet, der grösser als der Winkel (W1 bzw. W3) ist, der die wenigstens eine Rollenbahn oder jede der Rollenbahnen (14 bzw. 16) mit der waagrechten Ebene bildet.

17. Vorrichtung gemäss einem der Ansprüche 2 bis 16, **dadurch gekennzeichnet, dass** wenigstens einen Teil der Rollen der wenigstens einen Rollenbahn (14, 16) mit Antriebsmitteln (41, 42, 43, 44) angetrieben werden, wodurch eine mittlere Geschwindigkeit der transportierten Stückgüter (51) erzielt wird, die zwischen 0.1 und 0.5 Meter pro Sekunde liegt.

18. Vorrichtung gemäss einem der Ansprüche 2 bis 17, **dadurch gekennzeichnet, dass** die wenigstens eine Rollenbahn oder jede der Rollenbahnen (14, 16) Rollen enthält, die mit unterschiedlichen Geschwindigkeiten angetrieben werden.

## Claims

1. Device for transporting piece goods, the device including at least one output track (11) by which the goods are conveyed from an entrance (12) to an exit (13), the entrance (12) being at a higher level than the exit (13), and the output track (11) including in its longitudinal direction at least two partial sections (14, 15 resp. 15, 16) forming different angles (W1, W2 resp. W2, W3) with respect to a horizontal plane, **characterised in that** the at least two partial sections (14, 15 resp. 15, 16) have different adhesive properties.

2. Device according to claim 1, **characterised in that** the at least one output track (11) includes three partial sections in its longitudinal direction, the first partial section being a first roller conveyor (14), the third partial section being a second roller conveyor (16), and the second partial section being a simple chute (15) having a continuous upper surface extending in a single plane, the chute being disposed between the first roller conveyor (14) and the second roller conveyor (16), the adhesive properties of the roller conveyors (14 resp. 16) being different from the adhesive properties of the simple chute, and each one of the roller conveyors (14, 16) forming an angle (W1 resp. W3) with respect to a horizontal plane that is smaller than the angle (W2) between the simple chute (15) and the horizontal plane.

3. Device according to claim 2, **characterised in that** at least one of the roller conveyors (14, 16) comprises rollers having surfaces of different adhesive properties.

4. Device according to claim 3, **characterised in that** the at least one roller conveyor (14, 16) comprises groups (31, 32, 33, 34) of adjacent, but mutually spaced rollers, adjoining groups of which have different adhesive properties.

5. Device according to claim 3, **characterised in that** the at least one roller conveyor (14, 16) comprises at least one group (31) of adjacent, but mutually spaced rollers, the group comprising exclusively composed of rollers (31-1 to 31-8) having the same adhesive properties.

6. Device according to claim 3, **characterised in that** the at least one roller conveyor (14, 16) comprises at least one group (32) of adjacent, but mutually spaced rollers, the surfaces of adjoining rollers (32n, 32[n+1]) having different adhesive properties.

7. Device according to claim 3, **characterised in that** the at least one roller conveyor (14, 16) comprises rollers whose surface is made of steel as well as rollers whose surface is made of rubber.

8. Device according to one of claims 2 to 7, **characterised in that** the simple chute (15) forms an angle with respect to a horizontal plane that is between 15° and 40°.

9. Device according to one of claims 2 to 7, **characterised in that** the simple chute (15) forms an angle with respect to a horizontal plane that is between 20° and 30°.

10. Device according to one of claims 2 to 7, **characterised in that** the simple chute (15) forms an angle with respect to a horizontal plane that is between 23° and 27°.

11. Device according to one of claims 2 to 10, **characterised in that** the at least one roller conveyor or each one of the roller conveyors (14, 16) forms an angle with respect to a horizontal plane that is between 0° and 25°.

12. Device according to one of claims 2 to 10, **characterised in that** the at least one roller conveyor or each one of the roller conveyors (14, 16) forms an angle with respect to a horizontal plane that is between 10° and 20°.

13. Device according to one of claims 2 to 10, **characterised in that** the at least one roller conveyor or each one of the roller conveyors (14, 16) forms an angle with respect to a horizontal plane that is between 13° and 17°.

14. Device according to one of claims 2 to 13, **characterised in that** the simple chute (15) is a metal slide.

15. Device according to one of claims 2 to 14, **characterised in that** the entrance (12) comprises a continuous upper surface extending in a plane forming an angle (W4) with respect to a horizontal plane greater than the angle (W1 resp. W3) formed between the at least one roller conveyor or each one of the roller conveyors (14 resp. 16) and the horizontal plane.

16. Device according to one of claims 2 to 15, **characterised in that** the exit (13) has a continuous upper surface extending in a plane forming an angle (W5) with respect to a horizontal plane greater than the angle (W1 resp. W3) between the at least one roller conveyor or each one of the roller conveyors (14 resp. 16) and the horizontal plane.

17. Device according to one of claims 2 to 16, **characterised in that** at least part of the rollers of the at least one roller conveyor (14, 16) are driven by driving means (41, 42, 43, 44) in such a manner as to obtain an average speed of the transported piece goods (51) which is between 0.1 and 0.5 metres per second.

18. Device according to one of claims 2 to 17, **characterised in that** the at least one roller conveyor or each one of the roller conveyors (14, 16) comprises rollers that are driven at different speeds.

## Revendications

1. Dispositif pour le transport d'articles unitaires, ledit dispositif comprenant au moins un terminal (11) par lequel les articles sont convoyés d'une entrée (12) vers une sortie (13), l'entrée (12) étant située à un niveau plus élevé que la sortie (13), et le terminal (11) comprenant, en direction longitudinale, au moins deux sections partielles (14, 15 resp. 15, 16) formant des angles différents (W1, W2 resp. W2, W3) par rapport à un plan horizontal, **caractérisé en ce que** lesdites au moins deux sections partielles (14, 15 resp. 15, 16) présentent des propriétés adhésives différentes.

2. Dispositif selon la revendication 1, **caractérisé en ce que** ledit au moins un terminal (11) comprend, en direction longitudinale, trois sections partielles dont la première section partielle est un premier transporteur à rouleaux (14), la troisième section partielle est un deuxième transporteur à rouleaux (16), et la deuxième section partielle est une simple glissière (15) ayant une surface supérieure continue s'étendant dans un même plan et disposée entre le premier transporteur à rouleaux (14) et le deuxième transporteur à rouleaux (16), les propriétés adhésives des transporteurs à rouleaux (14, resp. 16) différant des propriétés adhésives de la simple glissière (15), et chacun des transporteurs à rouleaux (14, 16) formant, par rapport à un plan horizontal, un angle (W1 resp. W3) inférieur à l'angle (W2) entre la simple glissière (15) et ledit plan horizontal.

3. Dispositif selon la revendication 2, **caractérisé en ce que** l'un des transporteurs à rouleaux (14, 16) au moins comporte des rouleaux ayant des surfaces à propriétés adhésives différentes.

4. Dispositif selon la revendication 3, **caractérisé en ce que** ledit au moins un transporteur à rouleaux (14, 16) comporte des groupes (31, 32, 33, 34) de rouleaux juxtaposés mais écartés l'un de l'autre dont des groupes adjacents ont des propriétés adhésives différentes.

5. Dispositif selon la revendication 3, **caractérisé en ce que** ledit au moins un transporteur à rouleaux (14, 16) comporte au moins un groupe (31) de rouleaux juxtaposés mais écartés l'un de l'autre, ledit groupe comprenant exclusivement des rouleaux (31-1 à 31-8) ayant les mêmes propriétés adhésives.

6. Dispositif selon la revendication 3, **caractérisé en ce que** ledit au moins un transporteur à rouleaux (14, 16) comporte au moins un groupe (32) de rouleaux juxtaposés mais, écartés l'un de l'autre, les surfaces de rouleaux adjacents (32n, 32[n+1]) ayant des propriétés adhésives différentes.

7. Dispositif selon la revendication 3, **caractérisé en ce que** ledit au moins un transporteur à rouleaux (14, 16) comporte des rouleaux à surface en acier ainsi que des rouleaux à surface en caoutchouc.

8. Dispositif selon l'une des revendications 2 à 7, **caractérisé en ce que** la simple glissière (15) forme avec un plan horizontal un angle étant entre 15° et 40°.

9. Dispositif selon l'une des revendications 2 à 7, **caractérisé en ce que** la simple glissière (15) forme avec un plan horizontal un angle étant entre 20° et 30°.

10. Dispositif selon l'une des revendications 2 à 7, **caractérisé en ce que** la simple glissière (15) forme avec un plan horizontal un angle étant entre 23° et 27°.

11. Dispositif selon l'une des revendications 2 à 10, **caractérisé en ce que** ledit au moins un transporteur à rouleaux ou chacun des transporteurs à rouleaux (14, 16) forme avec un plan horizontal un angle étant entre 0° et 25°.

12. Dispositif selon l'une des revendications 2 à 10, **caractérisé en ce que** ledit au moins un transporteur à rouleaux ou chacun des transporteurs à rouleaux (14, 16) forme avec un plan horizontal un angle étant entre 10° et 20°.

13. Dispositif selon l'une des revendications 2 à 10, **caractérisé en ce que** ledit au moins un transporteur à rouleaux ou chacun des transporteurs à rouleaux (14, 16) forme avec un plan horizontal un angle étant entre 13° et 17°.

14. Dispositif selon l'une des revendications 2 à 13, **caractérisé en ce que** la simple glissière (15) est une glissière en tôle.

15. Dispositif selon l'une des revendications 2 à 14, **caractérisé en ce que** l'entrée (12) présente une surface supérieure continue qui est située dans un plan formant avec un plan horizontal un angle (W4) supérieur à l'angle (W1 resp. W3) entre ledit au moins un transporteur à rouleaux ou chacun des transporteurs à rouleaux (14 resp. 16) et ledit plan horizontal.

16. Dispositif selon l'une des revendications 2 à 15, **caractérisé en ce que** ladite sortie (13) présente une surface supérieure continue qui est située dans un plan formant avec un plan horizontal un angle (W5) supérieur à l'angle (W1 resp. W3) entre ledit au moins un transporteur à rouleaux ou chacun des transporteurs à rouleaux (14 resp. 16) et ledit plan horizontal.

17. Dispositif selon l'une des revendications 2 à 16, **caractérisé en ce qu'**une partie au moins des rouleaux dudit au moins un transporteur à rouleaux (14, 16) sont entraînés par des moyens d'entraînement (41, 42, 43, 44) de manière à atteindre une vitesse moyenne des articles (51) qui est entre 0.1 et 0.5 mètres par seconde.

18. Dispositif selon l'une des revendications 2 à 17, **caractérisé en ce que** ledit au moins un transporteur à rouleaux ou chacun des transporteurs à rouleaux (14, 16) comporte des rouleaux entraînés à différentes vitesses.
